# EUROPÄISCHE PATENTANMELDUNG

(11) **EP 2 015 044 A2**
(43) Veröffentlichungstag der Anmeldung: **14.01.2009**
(21) Anmeldenummer: 08104015.6
(22) Anmeldetag: 19.05.2008
(51) Int. Cl.: G01L 3/10

(54) **Magnetfeldempfindliche Sensoranordnung**

(30) Priorität: 21.06.2007 DE 102007028483
(71) Anmelder: ROBERT BOSCH GMBH, 70442 Stuttgart (DE)
(72) Erfinder: Noltemeyer, Ralf, 73249, Wernau (DE); Kimmerle, Mathias, 71711, Steinheim (DE); Waibler, Matthias, 73630, Remshalden-Hebsack (DE); Behrens, Holger, 71717, Beilstein (DE); Burkhardt, Klaus, 71679, Asperg (DE); Wein, Romy, 71679, Asperg (DE)

(57) **Zusammenfassung**

Es werden eine Sensoranordnung und ein Verfahren zur Herstellung einer Sensoranordnung vorgeschlagen, die zumindest ein Magnetfluss-Sammelelement (22, 24) aufweist, über welches der Magnetfluss eines Magnetkreises einem Sensorelement zuführbar ist. Das Magnetfluss-Sammelelement (22, 24) besteht aus zumindest zwei sich in einem Überlappungsbereich (40) zumindest teilweise überlappenden Teilen (26, 26'; 28, 28'), wobei die beiden Teile (26, 26'; 28, 28') durch eine Umspritzung (74) zumindest teilweise umgeben und in bestimmter Position zueinander gehalten sind.

## Beschreibung

### Stand der Technik

Die Erfindung geht aus von einer Sensoranordnung nach der Gattung des unabhängigen Anspruchs. Eine gattungsgemäße Sensoranordnung ist bereits in der DE 10 2005 031 086 A1 beschrieben. Zur Erfassung eines Differenzwinkels ist zumindest ein magnetfeldempfindliches Sensorelement vorgesehen, mit dem die Magnetfeldinformationen eines Magnetkreises, bestehend aus einem mit einer Welle verbindbaren Magnetpolrad und ferromagnetischen Fluxringen mit Zähnen auswertbar ist. Die Zähne verlaufen in radialer Richtung zum radialen Abgriff der Magnetfeldinformation des Magnetpolrads.

Es ist Aufgabe der vorliegenden Erfindung, eine einfachere Herstellung der Sensoranordnung zu ermöglichen. Diese Aufgabe wird gelöst durch die Merkmale des unabhängigen Anspruchs.

### Vorteile der Erfindung

Die erfindungsgemäße Sensoranordnung gemäß den Merkmalen des unabhängigen Anspruchs hat demgegenüber den Vorteil, dass die Magnetfluss-Sammelelemente kostengünstig aus Stanz-Biegeteilen hergestellt werden können. Dank der zumindest teilweise überlappenden Anordnung kann der magnetische Fluss in gewünschter Weise weitergeleitet werden. Um die hohen geometrischen Anforderungen zu erfüllen, lassen sich im nachfolgenden Umspritzprozess die geometrischen Genauigkeiten herstellen, die sonst nur über einen Tiefziehprozess möglich wären. Der hochgenaue geometrische Umspritzprozess aufgrund der vorgeschlagenenen Zweiteiligkeit des Magnetfluss-Sammelelements lässt einen sonst üblichen Tiefziehprozess überflüssig werden. Ein solcher Tiefziehprozess ist sehr aufwendig, da dort dickeres Material in die Form gezogen und dadurch ausgedünnt werden muss. Insbesondere durch den erforderlichen Halterahmen, um das Teil tiefziehen zu können, ist sehr viel Materialeinsatz möglich. Die durch Tiefziehen erzeugten Sammlerbleche sind aus einem Stück mit hoher Genauigkeit, jedoch sehr aufwendig zu fertigen.

Bei dem Umspritzvorgang lassen sich noch Befestigungselemente, wie beispielsweise Schraublöcher, Schnapphaken usw. mit anbringen. Auch dadurch vereinfacht sich der Fertigungsprozess. Aufgrund der Zweiteilung der Magnetfluss-Sammelelemente können diese durch bewegliche Kerne im Umspritzwerkzeug auf die erforderliche geometrische Form in der gewünschten Genauigkeit ausgerichtet werden.

In einer zweckmäßgien Weiterbildung weisen die Teile des Magnetfluss-Sammelelements einen L-förmigen Querschnitt auf. Dieser eignet sich insbesondere für die Bildung eines positionsgenauen Überlappungsberichs, da dort die Teile durch das Umspritzwerkzeug relativ zueinander leicht verschoben werden können.

In einer zweckmäßigen Weiterbildung weist die Umspritzung zumindest eine Öffnung auf. Dank dieser positionsgenauen Aufnahme des Sensorelements verbessert sich die Signalerfassung. Fertigungstechnisch ist das Vorsehen dieser Öffnung im Rahmen des Umspritzvorgangs ohne Zusatzaufwand möglich.

In einer zweckmäßigen Weiterbildung weist die Umspritzung zumindest eine Öffnung im Überlappungsbereich auf. Diese Öffnung resultiert daher, dass das Umspritzwerkzeug unmittelbar auf den Überlappungsbereich einwirkt, so dass die Teile dort in eine spaltminimierte Überdeckung gebracht werden können. Dadurch wird eine gute Weiterleitung des Magnetflusses zwischen den Schalen bzw. Teilen sichergestellt.

Weitere zweckmäßige Weiterbildungen ergeben sich aus weiteren abhängigen Ansprüchen und aus der Beschreibung.

### Beschreibung des Ausführungsbeispiels

Ein Ausführungsbeispiel der Sensoranordnung ist in der Zeichnung dargestellt und wird nachfolgend näher beschrieben.

Es zeigen:
die Figur 1 eine perspektivische Ansicht der Sensoranordnung,
die Figur 2 eine weitere perspektivische Ansicht der Sensoranordnung mit verbundenen Wellen zur Ermittlung eines Drehmoments oder Drehwinkels,
die Figur 3 eine perspektivische Ansicht der Magnetfluss-Sammelelemente,
die Figur 4 eine Schnittdarstellung des Umspritzwerkzeugs mit eingelegten Sammelelementen sowie
die Figuren 5a und 5b perspektivische Zusammenbaudarstellungen der umspritzten Sammelelemente.

### Beschreibung des Ausführungsbeispiels

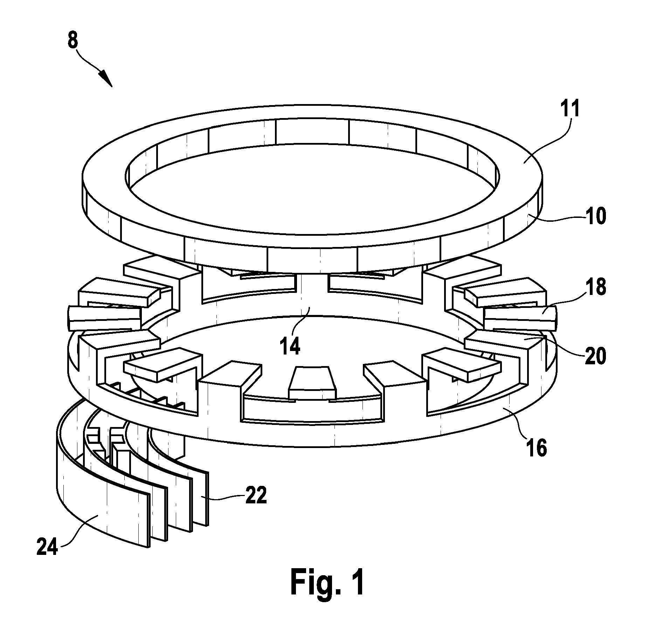

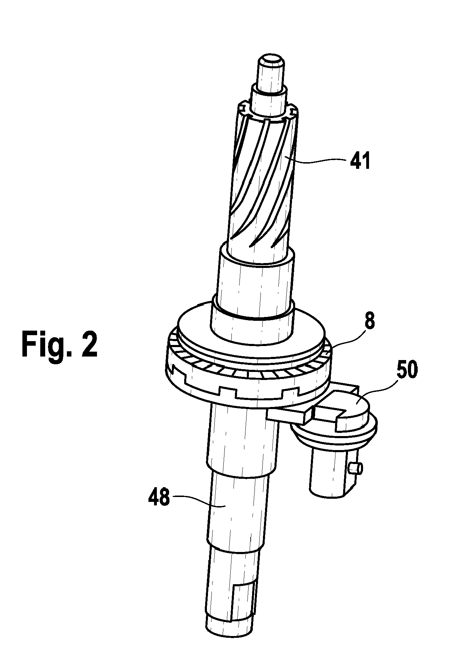

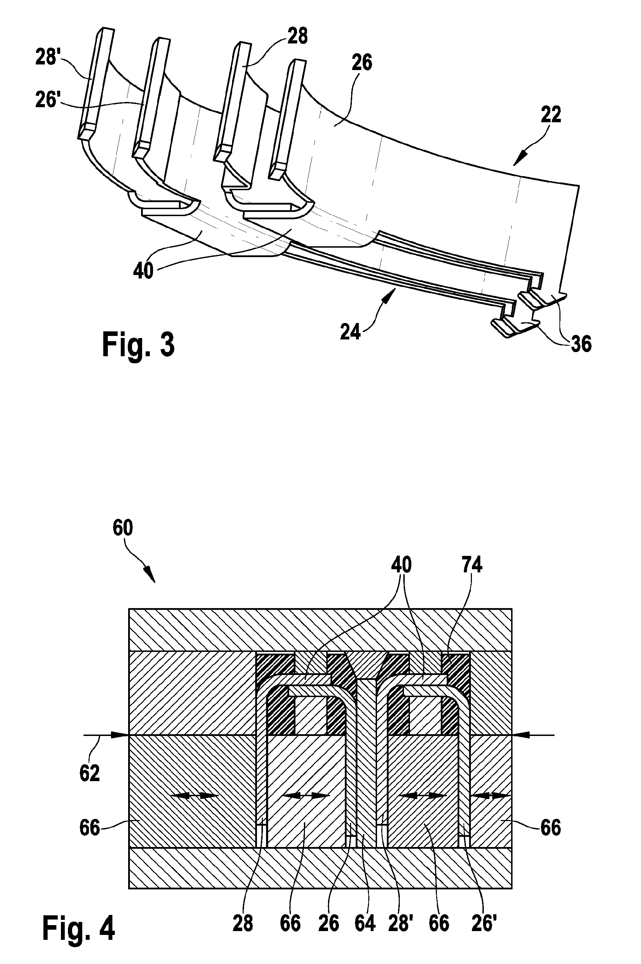

In Figur 1 sind die Komponenten einer Sensoranordnung 8 gezeigt. Ein Magnetpolrad 10 und ein Magnetfluss-Rückschlusselement 11 sind mit einer nicht dargestellten ersten Welle 41 verbunden. Eine zweite Welle 48, wie in Figur 2 beispielhaft gezeigt, steht mit einem ersten Fluxring 14 und einem zweiten Fluxring 16 in Verbindung. Der erste Fluxring 14 ist auf einem inneren Radius angeordnet und wird von einem zweiten Fluxring 16, der auf einem äußeren Radius angeordnet ist, umgeben. Ausgehend von dem ersten Fluxring 14 sind in regelmäßigen Abständen in Umfangsrichtung erste Zähne 18 ausgebildet, die sich in radialer Richtung vom Durchmesser des ersten Fluxrings 14 ausgehend nach außen hin erstrecken. Auch von dem zweiten Fluxring 16 gehen in regelmäßigen Abständen zweite Zähne 20 aus, die ebenfalls in radialer Richtung orientiert sind. Die Abstände zwischen den Zähnen 18, 20 sind so gewählt, dass erste Zähne 18 und zweite Zähne 20 ineinander greifen. Zwischen erstem Fluxring 14 und zweitem Fluxring 16 ist zumindest ein Sensorelement zur Erfassung des Magnetfelds anordenbar, und zwar in dem Bereich der Verjüngung. In dem Bereich des Sensorelements ist ein erstes Magnetfluss-Sammelelement 22 vorgesehen, bestehend aus erster Schale 26 und zweiter Schale 28, wie in Figur 3 dargestellt. Ein zweites Magnetfluss-Sammelelement 24 umschließt zumindest teilweise den zweiten Fluxring 16. Beide Magnetfluss-Sammelelemente 22, 24 sind kreissegmentförmig ausgebildet.

Zur Messung eines Drehmoments ist ein nicht dargestellter Torsionsstab auf der einen Seite mit dem Magnetpolrad 10 über einen Magnetpolhalter und der ersten Welle 41 verbunden. Auf der anderen Seite des Torsionsstabs wird ein Fluxringhalter mit den integrierten Fluxringen 14, 16 über die zweite Welle 48 verbunden. Die entsprechende Anordnung ist in Figur 2 gezeigt, bei der die Sensoranordnung 8 mit einem Sensormodul 50 versehen ist, in welchem die Sensorelemente 12 und Magnetfluss-Sammelelemente 22, 24 mit integriert sind.

Der Figur 3 lässt sich die genauere Darstellung der Magnetfluss-Sammelelemente 22, 24 entnehmen. Jedes der Magnetfluss-Sammelelemente 22, 24 besteht aus erster und zweiter Schale 26, 26'; 28, 28', wobei erste Schale 26, 26'und zweite Schale 28, 28'ein im Wesentliches L-förmiges Profil aufweisen und einen für die Weiterleitung des Magnetfusses genügend großen Überlappungsbereich 40 aufweisen. Die Magnetfluss-Sammelelemente 22, 24 besitzen vorzugsweise eine kreissegmentförmige Struktur, an deren Ende jeweils Rastnasen 36 vorgesehen sind zur Befestigung der Magnetfluss-Sammelelemente 22, 24.

In Figur 4 ist eine Schnittdarstellung eines Spritzwerkzeugs 60 gezeigt mit eingelegten zu umspritzenden Magentfluss-Sammelelementen 22, 24. So besteht das Spritzwerkzeug 60 aus einem unbeweglichen zentralen Werkzeugkern 64, an den sich links die erste Schale 26 des ersten Magnetfluss-Sammelelements 22 und rechts davon eine zweite Schale 28' des zweiten Magnetfluss-Sammelelements 24 anschließen. Die jeweiligen Schalen 26, 28; 26', 28' werden an den restlichen Seiten von beweglichen Werkzeugkernen 66 umschlossen. Die Bewegungsrichtungen der Werkzeugkerne ist durch horizontale Pfeile angedeutet. Links von der zweiten Schale 28 befindet sich ein weiterer beweglicher Werkzeugkern 66, rechts von der ersten Schale 26'ein weiterer beweglicher Werkzeugkern 66. Die Trennebene des Umspritzwerkzeugs 60 wird mit der Bezugsziffer 62 bezeichnet.

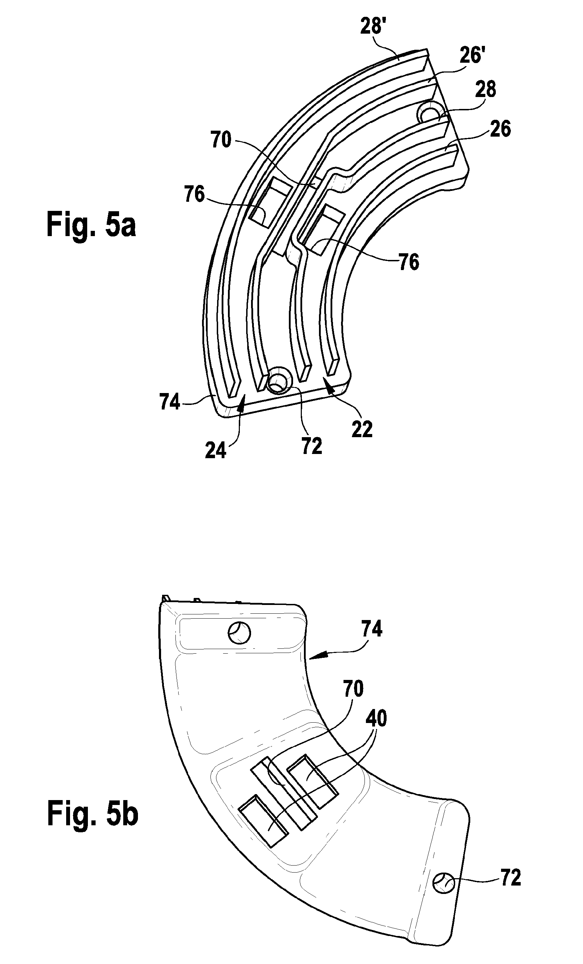

Den Figuren 5a und 5b lässt sich die Zusammenbaudarstellung der Sammelelemente 22, 24 mit einer Umspritzung 74 entnehmen. In mittleren Bereichen sind von den jeweiligen Schalen 26, 28'; 26', 28 umgeben jeweils Öffnungen 76 vorgesehen, wo die Überlappungsbereiche 40 zu liegen kommen. Zwischen erster Schale 26 des ersten Magnetfluss-Sammelelements 22 und der zweiten Schale 28'des zweiten Magnetfluss-Sammelelements 24 befindet sich eine weitere Öffnung, über die ein nicht dargestelltes Sensorelement zwischen den genannten Schalen angeordnet wird zur Erfassung des Magnetflusses. Weiterhin befinden sich jeweils an den Stirnseiten der Umspritzung 74 Befestigungsöffnungen 72.

Das in der Zeichnung dargestellte Ausführungsbeispiel arbeitet wie folgt. Wird zwischen der ersten Welle 41 und der zweiten Welle 48 ein Drehmoment erzeugt, so tordiert der nicht gezeigte Torsionsstab. Dadurch entsteht eine Winkeldifferenz zwischen dem Magnetpolrad 10 und den Fluxringen 14, 16. Durch diese Winkeldifferenz wird eine Änderung des Magnetflusses im Bereich des Sensorelements erzeugt, welches ein Maß für das auf die Wellen 41, 48 ausgeübte Drehmoment darstellt. Das Sensorelement stellt ein der Winkeldifferenz bzw. Drehmoment proportionales elektrisches Signal zur weiteren Auswertung zur Verfügung. Die Weiterleitung des über die Fluxringe 14, 16 abgegriffenen und vom Magentpolrad 10 bereitgestellten magnetischen Flusses erfolgt über die Magnetfluss-Sammelelemente 22, 24. Durch die Überlappungsbereiche 40, die über die Öffnungen 76 zu den Fluxringen 14, 16 hin freiliegend angeordnet sind, wird der Magnetfluss zwischen den Schalen 26, 26'; 28, 28' weitergeleitet.

Die Magnetfluss-Sammelelemente 22, 24 sind vorzugsweise als kostengünstige Stanz-Biegeteile ausgeführt. Ein Magnetfluss-Sammelelement 22, 24 besteht aus zwei Schalen 26, 28, welche so zueinander angeordnet sind, dass sie im unteren Bereich einen Überlappungsbereich 40 bilden. Durch die Überlappung lässt sich einerseits der magnetische Fluss weiterleiten. Auf der anderen Seite dient die Zweiteilung des Magnetfluss-Sammelelements 22, 24 der geometrisch hochgenauen Fertigung durch eine Verbindung der beiden Schalen 26, 26'; 28, 28' über die Umspritzung 74. Der hochgenaue geometrische Umspritzprozess aufgrund der vorgeschlagenenen Zweiteiligkeit des Magnetfluss-Sammelelements 22, 24 lässt einen sonst üblichen Tiefziehprozess überflüssig werden. Ein solcher Tiefziehprozess ist sehr aufwendig, da dort dickeres Material in die Form gezogen und dadurch ausgedünnt werden muss.

Die Schalen 26, 26'; 28, 28' werden in einem Umspritzvorgang in der korrekten geometrischen Position zueinander in Überlappung gebracht. Dazu werden die oberen Schalenbereiche jeweils zwischen die beweglichen Werkzeugkerne 66 gebracht. Diese sind in horizontaler Richtung verschiebbar und bringen diese über einen horizontalen Richtvorgang in die gewünschte Überlappungsposition. Hierbei gleiten die überlappenden Bleche bzw. unteren Bereiche der Schalen 26, 26'; 28, 28' übereinander. Sie werden gegenüber dem unbeweglichen zentralen Werkzeugkern 64 gedrückt, bis die gewünschte geometrische Position erreicht ist. Der unbewegliche Werkzeugkern 64 befindet sich zwischen den beiden Magentfluss-Sammelelementen 22, 24. In bekannter Weise werden die zwischen Sammelelementen 22, 24 und Spritzwerkzeug 60 bestehenden Hohlräume im Spritzgießverfahren mit Kunststoff befüllt, so dass sich die Umspritzung 74, bildet. Hierbei ist das Umspritzwerkzeug 60 so ausgestaltet, dass sich die entsprechenden Öffnungen 70 für das Sensorelement und die Befestigungsöffnungen 72 bilden. In der Öffnung 70 werden die integrierten Schaltungen der Messelemente, vorzugsweise sind es zwei für eine redundante Signalerfassung, eingebracht. Die Kunststoffumspritzung ermöglicht es, Befestigungselemente, beispielsweise die Befestigungsöffnungen 72, in einem Arbeitsgang mit vorzusehen.

Der obere Teil des Umspritzwerkzeugs 60 drückt unmittelbar auf die Überlappungsbereiche 40 der sich überlappenden Schalen 26, 26'; 28, 28'.

Dadurch wird eine Minimierung des Spalts zwischen den Schalen 26, 26'; 28, 28' im Überlappungsbereich erzielt, so dass der magnetische Fluss zwischen zwei Schalen 26, 26'; 28, 28' gut übertragen werden kann. Dadurch, dass der obere Teil des Umspritzwerkzeugs 60 unmittelbar auf die Überlappungsbereiche 40 drückt, bilden sich die Öffnungen 76 in der Umspritzung 74.

Die beschriebenen Magnetfluss-Sammelelemente 22, 24 lassen sich vorzugsweise bei solchen Sensoranordnungen 8 einsetzen, wo der magnetische Fluss als zu detektierende Größe abgegriffen bzw. weitergeleitet werden soll an das Sensorelement. Die Verwendung ist jedoch hierauf nicht eingeschränkt. Die Sensoranordnung 8 eignet sich insbesondere zur Drehmomenterfassung bei Lenksäulen in Kraftfahrzeugen, sie ist hierauf jedoch nicht beschränkt.

## Patentansprüche

1. Sensoranordnung zur Erfassung eines Magnetflusses, vorzugsweise zur Ermittlung eines Drehmoments oder eines Differenzwinkels, insbesondere basierend auf der Verdrehung zumindest eines Fluxrings (14, 16) gegenüber einem Magnetpolrad (10), mit zumindest einem Magnetfluss-Sammelelement (22, 24), über welches der Magnetfluss eines Magnetkreises einem Sensorelement zuführbar ist, **dadurch gekennzeichnet, dass** das Magnetfluss-Sammelelement (22, 24) aus zumindest zwei sich in einem Überlappungsbereich (40) zumindest teilweise überlappenden Teilen (26, 26'; 28, 28') besteht, wobei die beiden Teile (26, 26'; 28, 28') durch eine Umspritzung (74) zumindest teilweise umgeben und in bestimmter Position zueinander gehalten sind.

2. Sensoranordnung nach Anspruch 1, **dadurch gekennzeichnet, dass** es sich bei den Teilen (26, 26'; 28, 28') um Stanz-Biegeteile handelt.

3. Sensoranordnung nach einem der vorhergehenden Ansprüche, **dadurch gekennzeichnet, dass** die Teile (26, 26'; 28, 28') einen L-förmigen Querschnitt aufweisen.

4. Sensoranordnung nach einem der vorhergehenden Ansprüche, **dadurch gekennzeichnet, dass** die Umspritzung (74) zumindest eine Öffnung (70) aufweist zur Aufnahme des den Magnetfluss erfassenden Sensorelements.

5. Sensoranordnung nach einem der vorhergehenden Ansprüche, **dadurch gekennzeichnet, dass** die Umspritzung (74) zumindest eine Öffnung (76) im Überlappungsbereich (40) aufweist.

6. Sensoranordnung nach einem der vorhergehenden Ansprüche, **dadurch gekennzeichnet, dass** die Umspritzung (74) zumindest eine Befestigungsöffnung (72) aufweist.

7. Sensoranordnung nach einem der vorhergehenden Ansprüche, **dadurch gekennzeichnet, dass** es sich bei den Teilen um vorzugsweise kreissegmentförmige Schalen (26, 26'; 28, 28') handelt.

8. Sensoranordnung nach einem der vorhergehenden Ansprüche, **dadurch gekennzeichnet, dass** zumindest eines der Teile (26, 26'; 28, 28') zumindest ein Rastmittel (36), vorzugsweise eine Rastnase aufweist.

9. Verfahren zur Herstellung einer Sensoranordnung nach einem der vorhergehenden Ansprüche, **dadurch gekennzeichnet, dass** die zwei Teile (26, 26'; 28, 28') in ein Umspritzwerkzeug (60) gebracht werden, wobei die beiden Teile (26, 26'; 28, 28') so zueinander verschoben werden, dass sich der gewünschte Überlappungsbereich (40) einstellt, und anschließend die Teile (26, 26'; 28, 28') zumindest teilweises umspritzt werden.
